# EUROPÄISCHE PATENTSCHRIFT

(11) **EP 2 421 779 B1**
(45) Veröffentlichungstag und Bekanntmachung des Hinweises auf die Patenterteilung: **20.03.2013**
(21) Anmeldenummer: 10710314.5
(22) Anmeldetag: 23.03.2010
(51) Int. Cl.: B65G 54/02, H02K 41/03

(54) **UMLAUFENDE TRANSPORTVORRICHTUNG MIT VERBESSERTEM ANTRIEBSKONZEPT**
REVOLVING TRANSPORT DEVICE HAVING AN IMPROVED DRIVE CONCEPT
DISPOSITIF DE TRANSPORT ROTATIF À CONCEPTION D'ENTRAÎNEMENT AMÉLIORÉE

(30) Priorität: 23.04.2009 DE 102009002606
(43) Veröffentlichungstag der Anmeldung: 29.02.2012
(73) Patentinhaber: Robert Bosch GmbH, 70442 Stuttgart (DE)
(72) Erfinder: REINISCH, Martin, 73733 Esslingen (DE); LOECHT, Heinrich, 76461 Muggensturm (DE); VOELZ, Karsten, 70197 Stuttgart (DE)
(86) Internationale Anmeldenummer: PCT/EP2010/053746
(87) Internationale Veröffentlichungsnummer: WO 2010/121875

(56) Entgegenhaltungen:
- JP-A- 59 230 921
- US-B2- 6 876 107

## Beschreibung

### Stand der Technik

Die vorliegende Erfindung betrifft eine umlaufende Transportvorrichtung gemäß dem Oberbegriff des Anspruch 1 mit einem verbesserten, elektromagnetischen Antriebssystem.

Umlaufende Transportvorrichtungen sind aus dem Stand der Technik in verschiedenen Ausgestaltungen bekannt. Beispielsweise zeigt die US 6,876,107 B2 eine umlaufende Transportvorrichtung, bei der an der Transportstrecke eine Vielzahl von Spulen angeordnet sind. Die Spulen sind dabei unmittelbar benachbart zueinander angeordnet und sind in einem Kurvenbereich der Transportstrecke derart ausgebildet, dass dort eine unmittelbare Nebeneinanderanordnung sichergestellt ist. Dabei weisen die Spulen bei Draufsicht eines in Richtung der Innenseite der Kurve folgende Gestalt auf.

Bei umlaufenden Transportvorrichtungen wird üblicherweise versucht, einen Kurvenradius möglichst klein zu wählen, um einen kompakten Aufbau sicherzustellen. Das Dokument US 6876107 B2 offenbart eine Transportvorrichtung nach dem Obergriff des Anspruchs 1. Durch die in der US 6,876,107 B2 vorgeschlagene Spulenanordnung ist es zwar möglich, auf der geraden Transportstrecke eine konstante Geschwindigkeit mit Läufern zu fahren, jedoch nicht im Kurvenbereich. Die dort offenbarte Anordnung der Spulen reduziert die Fördergeschwindigkeit im Kurvenbereich, so dass es im Betrieb zu unerwünschten Störungen bzw. notwendig großen Abständen zwischen einzelnen Läufern kommt.

### Offenbarung der Erfindung

Die erfindungsgemäße Transportvorrichtung mit den Merkmalen des Anspruchs 1 weist demgegenüber den Vorteil auf, dass sie ein elektromagnetisches Antriebskonzept aufweist, welches einen störungsfreien Betrieb ermöglicht und insbesondere hohe Geschwindigkeiten sowohl auf einem Linearbereich der Transportstrecke als auch in einem Kurvenbereich der Transportstrecke ermöglicht. Hierbei können insbesondere gleiche Geschwindigkeiten im Linearbereich und im Kurvenbereich erreicht werden. Weiterhin können erfindungsgemäß Kurvenbereiche mit sehr kleinen Radien, d.h., insbesondere Radien kleiner als 100 mm, realisiert werden. Dies wird erfindungsgemäß dadurch erreicht, dass an einem Läufer, welcher auf der umlaufenden Transportstrecke umläuft, eine erste und eine zweite Reihe von Permanentmagneten angeordnet sind. Die Permanentmagneten sind dabei in Laufrichtung des Läufers hintereinander angeordnet. Ferner umfasst die Transportstrecke erste Spulenelemente, welche ausschließlich mit der ersten Reihe der Permanentmagnete am Läufer in Wirkverbindung stehen und zweite Spulenelemente, welche ausschließlich mit der zweiten Reihe der Permanentmagnete am Läufer in Wirkverbindung stehen. Hierdurch wird es möglich, dass insbesondere im Kurvenbereich eine für den Kurvenbereich optimal abgestimmte Anordnung der Spulenelemente und der mit diesen in Wirkverbindung stehenden Permanentmagnete am Läufer realisiert werden kann. Insbesondere ist es nicht notwendig, hier Kompromisse wie im Stand der Technik eingehen zu müssen, wodurch nur reduzierte Geschwindigkeiten des Läufers möglich sind.

Die Unteransprüche zeigen bevorzugte Weiterbildungen der Erfindung.

Vorzugsweise sind die Permanentmagnete der ersten und zweiten Reihe am Läufer jeweils unterschiedlich ausgerichtet angeordnet. Insbesondere weisen die Permanentmagnete des Läufers eine längliche, rechteckige Form auf. Besonders bevorzugt sind dabei die Permanentmagnete der ersten Reihe senkrecht zu einer Laufrichtung des Läufers angeordnet und/oder wenigstens ein Permanentmagnet der zweiten Reihe am Läufer ist in einem nicht senkrechten Winkel zur Laufrichtung, d.h., einem Winkel ungleich 90°, angeordnet. Hierdurch kann eine optimale Ausrichtung der Permanentmagnete der zweiten Reihe in Bezug auf einen Kurvenbereich der Transportstrecke erfolgen. Besonders bevorzugt sind dabei die Permanentmagneten der zweiten Reihe derart angeordnet, dass ihre Schwerpunkte auf einem gemeinsamen Bogenabschnitt eines Kreises liegen.

Um eine besonders betriebssichere Anordnung zu ermöglichen, sind die Spulenelemente derart an der Transportstrecke angeordnet, so dass sie von einem seitlichen Rand der Transportstrecke jeweils maximal nur bis zu einer Mittellinie der Transportstrecke reichen. Mit anderen Worten weisen die Spulenelemente maximal die halbe Breite der Transportstrecke auf.

Weiter bevorzugt sind benachbart zu den nur teilweise über die Breite der Transportstrecke reichende Spulenelemente Füllstücke angeordnet.

Gemäß einer weiteren bevorzugten Ausgestaltung der Erfindung sind die die Spulenelemente am Linearbereich der Transportstrecke an einer nach innen gerichteten Seite von der Mittellinie der Transportstrecke aus angeordnet. Ferner sind die Spulenelemente am Kurvenbereich der Transportstrecke an einer von der Mittellinie nach außen gerichteten Seite angeordnet. Hierdurch können an den Kurvenbereiche größere Radien realisiert werden, in dem die Spulenelemente angeordnet sind, so dass an den Kurvenbereichen eine größere Anzahl von Spulenelementen angeordnet werden kann und die Kurvenbereiche mit einer höheren Geschwindigkeit durchfahren werden können.

Vorzugsweise sind die Spulenelemente an den Kuvenbereichen in gleicher geometrischer Weise wie die Spulenelemente am Läufer angeordnet. D.h., ein Radius eines Bogenabschnitts, in welchem die Permanentmagneten am Läufer angeordnet sind, ist gleich einem Radius eines Bogenabschnitts an der Transportstrecke, an der die Permanentmagnete im Kurvenbereich der Transportstrecke angeordnet sind.

Besonders bevorzugt sind an jedem Läufer der Transportvorrichtung pro vorgesehener Reihe von Permanentmagneten eine ungerade Anzahl von Permanentmagneten angeordnet. Die Permanentmagneten sind dabei derart angeordnet, dass immer abwechselnd ein Nordpol bzw. ein Südpol angeordnet ist, so dass ein erster und ein letzter, in Laufrichtung des Läufers angeordneter Permanentmagnet jeder Reihe gleichpolig ist. Hierdurch wird bei der Verwendung von mehreren Läufern auf der Transportstrecke eine gegenseitige Abstoßung von aufeinanderfolgenden Läufern aufgrund der gleichartig gerichteten Pole am Anfang bzw. Ende jedes Läufers erreicht. Hierdurch kann insbesondere ein unbeabsichtigtes Zusammenstoßen von Läufern vermieden werden.

Die erfindungsgemäße Transportvorrichtung wird insbesondere in Verbindung mit Verpackungsmaschinen, beispielsweise für eine Beschickung der Verpackungsmaschinen, verwendet. Da die erfindungsgemäße umlaufende Transportvorrichtung sehr kompakt und insbesondere mit Radien unter 100 mm hergestellt werden kann, eignet sie sich besonders gut für den Einsatz bei Kleingütern.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Draufsicht einer Transportvorrichtung gemäß einem Ausführungsbeispiel der Erfindung, und
- Figur 2: eine schematische Draufsicht eines in Figur 1 verwendeten Läufers.

### Bevorzugte Ausführungsform der Erfindung

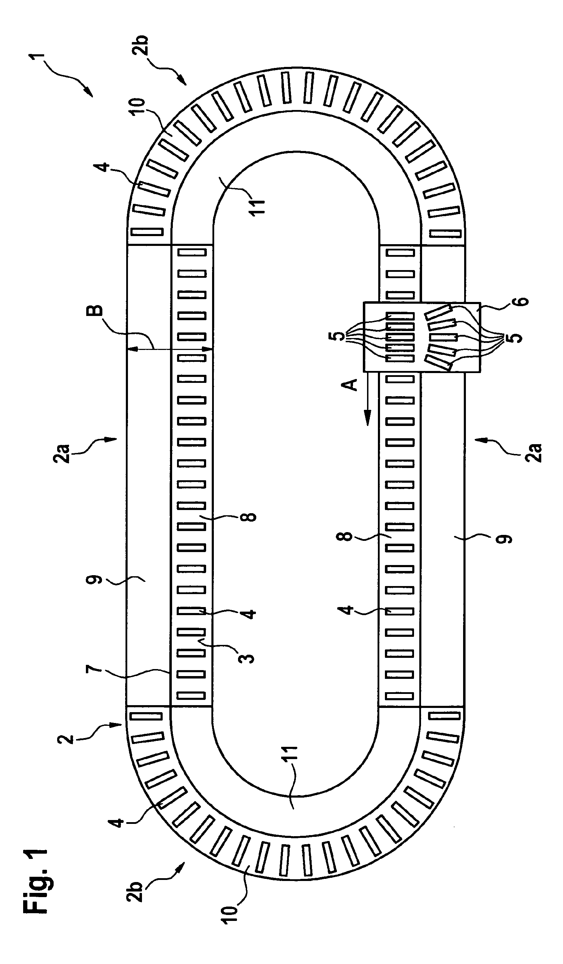

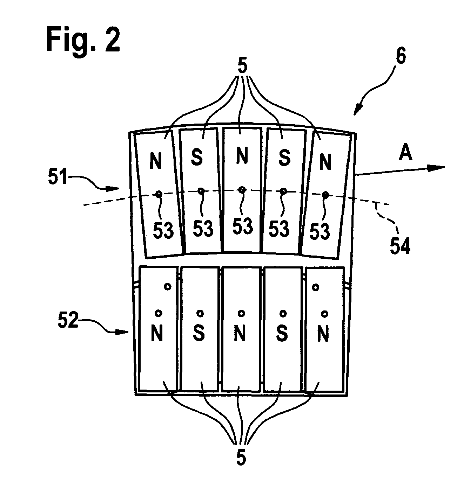

Nachfolgend wird unter Bezugnahme auf die Figuren 1 und 2 eine Transportvorrichtung 1 gemäß einem bevorzugten Ausführungsbeispiel der Erfindung im Detail beschrieben.

Wie aus Figur 1 ersichtlich ist, umfasst die Transportvorrichtung 1 eine umlaufende Transportstrecke 2 mit zwei linearen Bereichen 2a, welche jeweils über zwei Kurvenbereiche 2b miteinander verbunden sind. Auf der Transportstrecke sind mehrere Läufer 6 geführt, wobei in Figur 1 aus Übersichtlichkeitsgründen lediglich ein Läufer dargestellt ist. Die Läufer können dabei direkt oder indirekt Produkte fördern (nicht dargestellt). Zwischen der umlaufenden Transportstrecke 2 und den Läufern 6 ist ein elektromagnetischer Antrieb vorgesehen. Wie aus Figur 1 ersichtlich ist, umfasst der elektromagnetische Antrieb dabei eine Vielzahl von Spulenelementen 4, welche in Laufrichtung hintereinander angeordnet sind. Mit dem Bezugszeichen 3 ist eine Trägeroberfläche bezeichnet. Weiterhin ist auf jedem der Läufer 6 eine Vielzahl von Permanentmagneten 5 angeordnet. Hierdurch können durch entsprechende Bestromung der einen Stator bildenden Spulenelemente 4 die Läufer 6 auf der Transportstrecke 2 in Laufrichtung A fortbewegt werden. Die Läufer 6 werden dabei mittels nicht dargestellter Führungselemente an der Transportstrecke 2 geführt.

Wie unmittelbar aus Figur 1 ersichtlich ist, weist die Transportstrecke 2 einen unterschiedlichen Aufbau im Linearbereich 2a und im Kurvenbereich 2b auf. Die Transportstrecke 2 hat eine gedachte Mittellinie 7, welche genau in der Mitte der Transportstrecke 2 verläuft. Die Mittellinie 7 teilt dabei eine Breite B der Transportstrecke 2 sowohl im Linearbereich 2a als auch im Kurvenbereich 2b genau zur Hälfte. Im Linearbereich 2a ist dabei ein linearer Spulenbereich 8 gebildet, welcher an einer nach innen gerichteten Seite der Mittellinie 7 angeordnet ist. In den Kurvenbereichen 2b sind bogenförmige Spulenbereiche10 vorgesehen, welche an der nach außen gerichteten Seite der Mittellinie 7 angeordnet sind (vgl. Figur 1). Am Linearbereich 2a sind an der nach außen gerichteten Seite der Mittellinie 7 lineare Füllstücke 9 ohne elektromagnetische Funktion angeordnet und an den Kurvenbereichen 2b sind an den nach innen gerichteten Seiten der Mittellinie 7 bogenförmige Füllstücke 11 ohne elektromagnetische Funktion angeordnet. Die Spulenelemente 4, sowohl im linearen Bereich 2a als auch im Kurvenbereich 2b, weisen eine gerade, rechteckige Form auf. Im Linearbereich 2a sind die Spulenelemente 4 senkrecht zur Laufrichtung A in Reihe hintereinander mit vorbestimmten Abständen angeordnet. In den Kurvenbereichen 2b sind die Spulenelemente 4 derart in Reihe angeordnet, dass sie entsprechend dem Bogen des Kurvenbereichs 2b angeordnet sind. Hierbei sind die Spulenelemente 4 in den Kurvenbereichen 2b jeweils senkrecht zu Tangenten an der jeweiligen Position des Spulenelements angeordnet. Die Spulenelemente 4 in den Kurvenbereichen 2b weisen dabei jedoch ebenfalls eine gerade, rechteckige Form auf.

Der Läufer 6 ist im Detail in Figur 2 dargestellt. Wie aus Figur 2 ersichtlich ist, sind die Permanentmagnete 5 am Läufer 6 in einer ersten Reihe 51 und einer zweiten Reihe 52 angeordnet. Die Anordnung der Permanentmagnete 5 der ersten Reihe 51 entspricht dabei der Anordnung der Spulenelemente 4 in den Kurvenbereichen 2b. Mit anderen Worten sind die Permanentmagnete 5 der ersten Reihe 51 mit ihrem Schwerpunkten 53 jeweils auf einem Bogenteilstück 54 angeordnet. Ein Radius des Bogenteilstücks 54 entspricht dabei einem Radius, auf dem die Schwerpunkte der Spulenelemente 4 in den Kurvenbereichen 2b liegen. Die Permanentmagnete 5 der zweiten Reihe 52 am Läufer sind dabei senkrecht zur Laufrichtung A angeordnet und damit in gleicher Weise wie die Spulenelemente 4 an den Linearbereichen 2a der Transportstrecke 2.

Durch die erfindungsgemäße einreihige Anordnung der Stator- und Spulenelemente an der Transportstrecke auf unterschiedlichen Breiten der Transportstrecke wird somit erreicht, dass die Spulenelemente 4 der linearen Spulenbereiche 8 ausschließlich mit den Permanentmagneten 5 der zweiten Reihe 52 der Läufer in Wirkverbindung stehen. In gleicher Weise sind in den Kurvenbereichen 2b die bogenförmigen Spulenbereiche 10 in Wirkverbindung mit den Permanentmagneten 5 der ersten Reihe 51 an den Läufern 6, welche ebenfalls bogenförmig angeordnet sind. Somit kann eine entsprechende Ansteuerung des elektromagnetischen Antriebs auf jeweils unterschiedliche Weise für die Linearbereiche 2a und die Kurvenbereiche 2b ermöglicht werden, da am Läufer für die jeweiligen Bereiche unterschiedliche Reihen von Permanentmagneten angeordnet sind und jeweils ausschließlich mit den entsprechenden Spulenbereichen zusammenwirken. Somit können erfindungsgemäß sowohl in den Linearbereichen 2a als auch in den Kurvenbereichen 2b annähernd ideale Überdeckungsverhältnisse zwischen den Spulenelementen und den Permanentmagneten der jeweiligen Reihe am Läufer erreicht werden, so dass keine unnötigen Kompromisse bei der Auslegung der Transportvorrichtung notwendig sind. Weiterhin ermöglicht die erfindungsgemäße Lösung eine Verkleinerung der Spulenelemente sowohl in den Linearbereichen 2a als auch in den Kurvenbereichen 2b. Weiterhin führt die erfindungsgemäße Unterteilung der Transportstrecke 2 zu einer verbesserten Führungsstabilität für den Läufer 6. Es sei weiterhin angemerkt, dass zur Erhöhung der Vorschubkraft in ausgewählten Linearbereichen auch zusätzliche lineare Spulenelemente parallel geschaltet werden können.

Die beschriebene erfindungsgemäße Transportvorrichtung wird insbesondere in Verbindung mit Verpackungsmaschinen verwendet, wobei die Läufer 6 die zu verpackenden Artikel, z.B. Beutel, Flaschen, Schokoladenriegel, etc., direkt oder indirekt fördern. Mit indirekt fördern ist hierbei gemeint, dass am Läufer beispielsweise ein Schieber o.ä. zusätzlich angeordnet ist, welcher mit dem zu fördernden Produkt in Kontakt ist. Die Transportstrecke 2 kann dabei entweder waagrecht oder senkrecht aufgestellt sein. Ein Radius der Kurvenbereiche 2b beträgt dabei vorzugsweise weniger als 100 mm, insbesondere ca. 90 mm.

## Patentansprüche

1. Transportvorrichtung, insbesondere zur Beschickung von Verpackungsmaschinen, umfassend:
- eine umlaufende Transportstrecke mit einem Linearbereich (2a) und einem Kurvenbereich (2b),
- einen elektromagnetischen Antrieb mit einer Vielzahl von ortsfesten Spulenelementen (4) und einer Vielzahl von Permanentmagneten (5), wobei die ortsfesten Spulenelemente (4) an der Transportstrecke (2) angeordnet sind, und
- wenigstens einen Läufer (6) welcher verfahrbar an der umlaufenden Transportstrecke (2) angeordnet ist und mittels elektromagnetischer Kräfte bewegbar ist, wobei die Permanentmagnete (5) am Läufer (6) angeordnet sind, **dadurch gekennzeichnet, dass**
- am Läufer (6) eine erste Reihe (51) von Permanentmagneten (5) und eine zweite Reihe (52) von Permanentmagneten (5) angeordnet ist,
- wobei die erste Reihe (51) und die zweite Reihe (52) der Permanentmagnete in einer Laufrichtung (A) des Läufers (6) hinterein ander angeordnet sind, und
- wobei die umlaufende Transportstrecke (2) erste Spulenbereiche (10) aufweist, welche ausschließlich mit der ersten Reihe (51) der Permanentmagnete (5) am Läufer (6) in Wirkverbindung stehen und zweite Spulenbereiche (8) aufweist, welche ausschließlich mit der zweiten Reihe (52) der Permanentmagnete (5) am Läufer (6) in Wirkverbindung stehen.

2. Transportvorrichtung nach Anspruch 1, **dadurch gekennzeichnet, dass** die erste Reihe (51) von Permanentmagneten (5) des Läufers unterschiedlich ausgerichtet zur zweiten Reihe (52) von Permanentmagneten des Läufers angeordnet sind.

3. Transportvorrichtung nach Anspruch 1 oder 2, **dadurch gekennzeichnet, dass** die Permanentmagnete (5) als lineare Permanentmagnete mit einer rechteckigen Form ausgebildet sind.

4. Transportvorrichtung nach Anspruch 2 oder 3, **dadurch gekennzeichnet, dass** die Permanentmagnete (5) der zweiten Reihe (52) senkrecht zur Laufrichtung (A) des Läufers angeordnet sind und wenigstens ein Permanentmagnet der ersten Reihe (51) in einem Winkel ungleich 90° zur Laufrichtung (A) des Läufers angeordnet ist.

5. Transportvorrichtung nach Anspruch 4, **dadurch gekennzeichnet, dass** die Permanentmagnete (5) der ersten Reihe (51) mit ihren Schwerpunkten (53) auf einem Bogenabschnitt (54) angeordnet sind.

6. Transportvorrichtung nach einem der vorhergehenden Ansprüche, **dadurch gekennzeichnet, dass** die Spulenbereiche (8, 10) nur teilweise über eine gesamte Breite (B) der Transportstrecke (2) angeordnet sind.

7. Transportvorrichtung nach Anspruch 6, **dadurch gekennzeichnet, dass** benachbart zu den nur teilweise über die Breite (B) der Transportstrecke (2) angeordnete Spulenbereiche Füllstücke (9, 11) ohne elektromagnetische funktion angeordnet sind.

8. Transportvorrichtung nach Anspruch 6 oder 7, **dadurch gekennzeichnet, dass** die Spulenbereiche an der gesamten Transportstrecke jeweils nur bis zu einer Mittellinie (7) der Transportstrecke (2) reichen.

9. Transportvorrichtung nach Anspruch 8, **dadurch gekennzeichnet, dass** die Spulenbereiche am Linearbereich (2a) der Transportstrecke an einer nach innen gerichteten Seite der Mittellinie (7) der Transportstrecke angeordnet sind und die Spulenbereiche an dem Kurvenbereich (2b) der Transportstrecke an einer nach außen gerichteten Seite der Mittellinie (7) angeordnet sind.

10. Transportvorrichtung nach einem der vorhergehenden Ansprüche, **dadurch gekennzeichnet, dass** die Spulenelemente am Kurvenbereich (2b) auf einem gleichen Radius wie die Permanentmagnete der ersten Reihe (51) am Läufer angeordnet sind.

11. Transportvorrichtung nach einem der vorhergehenden Ansprüche, **dadurch gekennzeichnet, dass** am Läufer (6) pro Reihe (51, 52) von Permanentmagneten (5) eine ungerade Anzahl von Permanentmagneten (5) angeordnet ist, wobei ein erster und ein letzter Permanentmagnet in Laufrichtung (A) des Läufers (6) je in Reihe jeweils gleichpolig ist, um bei Verwendung von mehreren Läufern (6) eine gegenseitige Abstoßung von aufeinanderfolgenden Läufern zu erreichen.

## Claims

1. Transporting apparatus, in particular for charging packaging machines, comprising:
- a circulating transporting path having a linear region (2a) and a curved region (2b),
- an electromagnetic drive having a multiplicity of fixed-location coil elements (4) and a multiplicity of permanent magnets (5), wherein the fixed-location coil elements (4) are arranged on the transporting path (2), and
- at least one rotor (6), which is arranged in a displaceable manner on the circulating transporting path (2) and can be moved by means of electromagnetic forces, wherein the permanent magnets (5) are arranged on the rotor (6),
**characterized in that**
- a first row (51) of permanent magnets (5) and a second row (52) of permanent magnets (5) are arranged on the rotor (6),
- wherein the first row (51) and the second row (52) of permanent magnets are arranged one behind the other, as seen in a running direction (A) of the rotor (6), and
- wherein the circulating transporting path (2) has first coil regions (10), which are in operative connection exclusively with the first row (51) of permanent magnets (5) on the rotor (6), and has second coil regions (8), which are in operative connection exclusively with the second row (52) of permanent magnets (5) on the rotor (6).

2. Transporting apparatus according to Claim 1, **characterized in that** the first row (51) of permanent magnets (5) of the rotor are oriented differently to the second row (52) of permanent magnets of the rotor.

3. Transporting apparatus according to Claim 1 or 2, **characterized in that** the permanent magnets (5) are designed as linear permanent magnets of rectangular form.

4. Transporting apparatus according to Claim 2 or 3, **characterized in that** the permanent magnets (5) of the second row (52) are arranged perpendicularly to the running direction (A) of the rotor, and at least one permanent magnet of the first row (51) is arranged at an angle other than 90° in relation to the running direction (A) of the rotor.

5. Transporting apparatus according to Claim 4, **characterized in that** the permanent magnets (5) of the first row (51) have their centres of gravity (53) arranged on an arcuate portion (54).

6. Transporting apparatus according to one of the preceding claims, **characterized in that** the coil regions (8, 10) are arranged over only part of the entire width (B) of the transporting path (2).

7. Transporting apparatus according to Claim 6, **characterized in that** filler components (9, 11) without any electromagnetic function are arranged adjacent to the coil regions arranged over only part of the width (B) of the transporting path (2).

8. Transporting apparatus according to Claim 6 or 7, **characterized in that** over the entire transporting path, the coil regions each extend only up to a centre line (7) of the transporting path (2).

9. Transporting apparatus according to Claim 8, **characterized in that** the coil regions on the linear region (2a) of the transporting path are arranged on an inwardly directed side of the centre line (7) of the transporting path, and the coil regions on the curved region (2b) of the transporting path are arranged on an outwardly directed side of the centre line (7).

10. Transporting apparatus according to one of the preceding claims, **characterized in that** the coil elements on the curved region (2b) are arranged over the same radius as the permanent magnets of the first row (51) on the rotor.

11. Transporting apparatus according to one of the preceding claims, **characterized in that** each row (51, 52) of permanent magnets (5) on the rotor (6) contains an odd number of permanent magnets (5), wherein a first and a last permanent magnet, as seen in the running direction (A) of the rotor (6), are each unipolar, so that, if use is made of a plurality of rotors (6), successive rotors are repelled from one another.

## Revendications

1. Système de transport, en particulier prévu pour alimenter des machines d'emballage, et comportant :
une piste de transport en boucle dotée d'une partie rectiligne (2a) et d'une partie courbe (2b),
un entraînement électromagnétique doté de plusieurs éléments fixes de bobine (4) et de plusieurs aimants permanents (5), les éléments fixes de bobine (4) étant disposés sur la piste de transport (2) et
au moins un induit (6) qui peut être déplacé sur la piste de transport (2) en boucle et qui peut être déplacé sous l'action de forces électromagnétiques, les aimants permanents (5) étant disposés sur l'induit (6),
**caractérisé en ce que**
une première série (51) d'aimants permanents (5) et une deuxième série (52) d'aimants permanents (5) sont disposées sur l'induit (6),
**en ce que** la première série (51) et la deuxième série (52) d'aimants permanents sont disposées l'une derrière l'autre dans une direction de déplacement (A) de l'induit (6) et
**en ce que** la piste de transport (2) en boucle présente des premières parties de bobine (10) qui coopèrent uniquement avec la première série (51) d'aimants permanents (5) sur l'induit (6) et des deuxièmes parties de bobine (8) qui coopèrent uniquement avec la deuxième série (52) d'aimants permanents (5) sur l'induit (6).

2. Système de transport selon la revendication 1, **caractérisé en ce que** la première série (51) d'aimants permanents (5) de l'induit est disposée dans une orientation différente de celle de la deuxième série (52) d'aimants permanents de l'induit.

3. Système de transport selon les revendications 1 ou 2, **caractérisé en ce que** les aimants permanents (5) sont configurés comme aimants permanents rectilignes de forme rectangulaire.

4. Système de transport selon les revendications 2 ou 3, **caractérisé en ce que** les aimants permanents (5) de la deuxième série (52) sont disposés perpendiculairement à la direction de déplacement (A) de l'induit et **en ce qu'**au moins un aimant permanents de la première série (51) est disposé à un angle différent de 90° par rapport à la direction d'avancement (A) de l'induit.

5. Système de transport selon la revendication 4, **caractérisé en ce que** les aimants permanents (5) de la première série (51) sont disposés avec leur centre de gravité (53) sur un arc de cercle (54).

6. Système de transport selon l'une des revendications précédentes, **caractérisé en ce que** les parties de bobine (8, 10) ne sont disposées que partiellement sur la largeur totale (B) de la piste de transport (2).

7. Système de transport selon la revendication 6, **caractérisé en ce que** des pièces de charge (9, 11) sans fonction électromagnétique sont disposées au voisinage des parties de bobine disposées uniquement partiellement sur la largeur (B) de la piste de transport (2).

8. Système de transport selon les revendications 6 ou 7, **caractérisé en ce que** les parties de bobine ne s'étendent que jusqu'à une ligne centrale (7) de la piste de transport (2) sur la totalité de la piste de transport.

9. Système de transport selon la revendication 8, **caractérisé en ce que** sur la partie rectiligne (2a) de la piste de transport, des parties de bobine sont disposées sur un côté de la ligne centrale (7) de la piste de transport orienté vers l'intérieur et **en ce que** sur la partie courbe (2b) de la piste de transport, les parties de bobine sont disposées sur un côté de la ligne centrale (7) orienté vers l'extérieur.

10. Système de transport selon l'une des revendications précédentes, **caractérisé en ce que** sur la partie courbe (2b), les éléments de bobine sont disposés sur l'induit au même rayon que les aimants permanents de la première série (51).

11. Système de transport selon l'une des revendications précédentes, **caractérisé en ce qu'**un nombre impair d'aimants permanents (5) est disposé sur l'induit (6) pour chaque série (51, 52) d'aimants permanents (5), un premier et un dernier aimant permanent dans la direction de déplacement (A) de l'induit (6) présentant la même polarité dans chaque rangée pour que des induits successifs viennent buter l'un contre l'autre lorsque l'on utilise plusieurs induits (6).
